# FASCICULE DE BREVET EUROPEEN

(11) **EP 1 733 924 B1**
(45) Date de publication et mention de la délivrance du brevet: **16.07.2008**
(21) Numéro de dépôt: 06300421.2
(22) Date de dépôt: 02.05.2006
(51) Int. Cl.: B60R 11/02

(54) **Sous ensemble de véhicule automobile pour fixation de grille d'habillage**
Baugruppe eines Kraftfahrzeugs zum fixieren eines Verkleidungsgitters
Sub-assembly of a motor vehicle for fixing an interior trim component grille

(30) Priorité: 16.06.2005 FR 0551650
(43) Date de publication de la demande: 20.12.2006
(73) Titulaire: RENAULT S.A.S., 92100 Boulogne Billancourt (FR)
(72) Inventeur: Frileux, Stéphane, 78610, LES BREVIAIRES (FR); Sommaire, Olivier, 78640, VILLIERS SAINT FREDERIC (FR)

(56) Documents cités:
- DE-A1- 3 407 367
- DE-A1- 3 706 918
- DE-U1- 9 418 196
- GB-A- 2 305 064
- US-A- 4 546 850
- US-A1- 2005 002 199

## Description

La présente invention se rapporte à un sous ensemble de véhicule automobile pour fixation de grille d'habillage, le sous ensemble comportant une paroi d'habillage d'habitacle du véhicule, un boîtier de haut parleur et une grille de recouvrement de haut parleur, le boîtier étant monté dans un orifice de la paroi.

Un tel sous ensemble, du type du dispositif décrit dans le document de brevet DE 94 18196 U1, comporte un haut parleur fixé sur la paroi, ses moyens d'encliquetage et une grille fixée indépendamment sur la paroi par ses moyens d'encliquetage. Les moyens d'encliquetages du haut parleur et de la grille sont différents et s'accrochent sur une tranche de la paroi délimitant l'orifice. Un problème est que pour que la grille ne se détache pas de la paroi lors d'une déformation de la paroi, par exemple lors d'un choc type accident violent, ses moyens d'encliquetage doivent être fermes, comme ceux du haut parleur, donc difficiles à monter.

L'invention vise à améliorer un tel sous ensemble.

L'invention a pour objet un sous ensemble de véhicule pour fixation de grille d'habillage, le sous ensemble comportant une paroi d'habillage d'habitacle du véhicule, un boîtier de haut parleur et une grille de recouvrement de haut parleur, le boîtier étant monté dans un orifice de la paroi, caractérisé en ce que le boîtier comporte des premiers moyens de fixation sur la paroi délimitant l'orifice, en ce que la grille comporte des deuxièmes moyens de fixation sur le boîtier et en ce que les premier et deuxième moyens de fixation sont distincts et indépendants.

Selon un mode de réalisation de l'invention, le sous ensemble comporte des troisièmes moyens de fixation auxiliaires. Les troisièmes moyens de fixation auxiliaires sont adaptés à être libres par rapport à la paroi délimitant l'orifice en position normale d'utilisation quand les premiers moyens de fixation coopèrent avec la paroi. Les troisièmes moyens de fixation auxiliaires sont des moyens anti-éjection adaptés à coopérer avec la paroi quand les premiers moyens de fixation sont décrochés de la paroi.

Selon un mode de réalisation de l'invention, les troisièmes moyens de fixation auxiliaires sont aménagés sur la grille.

Selon un mode de réalisation de l'invention, les deuxièmes moyens de fixation sont aménagés sur un côté interne d'un bras de la grille et les troisièmes moyens de fixation auxiliaires sont aménagés sur un côté externe du bras.

Selon un mode de réalisation de l'invention, les moyens de fixation sont des organes d'encliquetage.

Selon un mode de réalisation de l'invention, les premier et deuxième moyens de fixation sont décalés angulairement sur le pourtour de l'orifice par rapport au centre du boîtier.

Selon un mode de réalisation de l'invention, le boîtier est vide de tout élément électrique et acoustique de haut parleur.

L'invention a également pour objet un véhicule qui comporte un sous ensemble comme ci-dessus, le sous ensemble étant un sous ensemble assurant la tenue de la grille sur la paroi même lors d'une déformation de cette dernière.

Selon un mode de réalisation du véhicule selon l'invention, le véhicule comportant une planche de bord avec un coussin gonflable, la paroi est une portion de la planche de bord et le sous ensemble assure la tenue de la grille sur la planche de bord lors d'un choc avec déploiement du coussin gonflable.

Selon un mode de réalisation du véhicule selon l'invention, les troisièmes moyens de fixation auxiliaires sont des moyens anti-éjection qui coopèrent avec la paroi après que les premiers moyens de fixation se soient décrochés de la paroi.

D'autres caractéristiques et avantages de l'invention apparaîtront clairement à la lecture de la description suivante du mode de réalisation non limitatif de celle-ci, en liaison avec les dessins annexés sur lesquels :

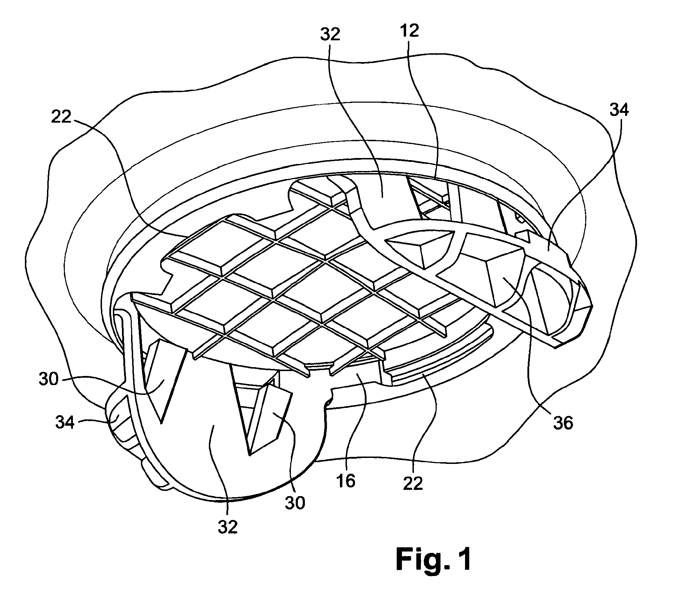

- la figure 1 est une vue en perspective de dessous d'une grille de haut parleur selon l'invention,

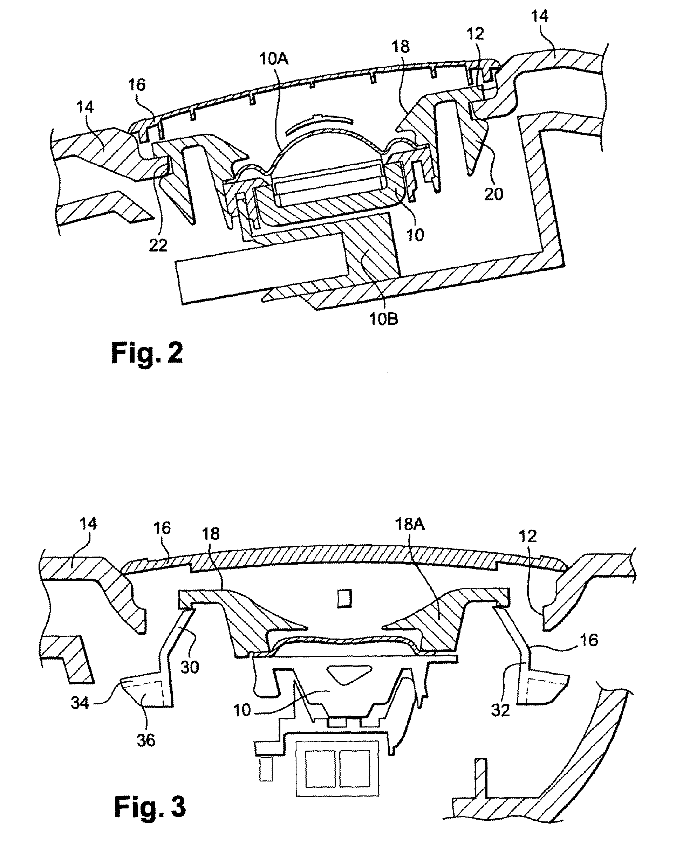

- les figures 2 et 3 sont des sections d'un sous ensemble selon l'invention.

Traditionnellement, un véhicule automobile est équipé d'une planche de bord avec une coiffe supérieure visible par des occupants d'un véhicule.

Dans certains véhicules, un petit haut parleur 10, couramment appelé tweeter, par exemple de diamètre 3 centimètres est monté dans la coiffe, à proximité du bas de pare brise et du bas de chaque montant latéral, pour la restitution des fréquences élevées du système audio du véhicule. Le tweeter est traditionnellement monté en regard d'un orifice 12 d'une paroi de la coiffe 14, en étant protégé par une grille 16 de pourtour sensiblement circulaire.

La grille comporte une plaque supérieure dans laquelle sont aménagés les trous permettant le passage du son.

Le haut parleur 10, ou tweeter, comporte un boîtier 18 ou carcasse pour supporter la membrane 10A, l'électro-aimant, un connecteur 10B ...

Selon l'invention, le boîtier 18 comporte des moyens de fixation, en l'espèce des crochets périphériques d'encliquetage 20 pour fixation du haut parleur dans une encoche 22 de la tranche de la paroi 14 délimitant l'orifice 12. Les crochets 20 sont diamétralement opposés sur le boîtier 18.

Il est important que, lors d'un accident, la grille ne puisse pas de détacher de la coiffe afin d'éviter qu'elle ne soit projetée dans l'habitacle, sans utiliser un moyen de fixation trop difficile à monter.

Selon l'invention, la grille 16 comporte des moyens de fixation par encliquetage sur le boîtier 18. Les moyens fixation du boîtier sur la paroi et les moyens de fixation de la grille sur le boîtier du tweeter sont distincts et indépendants.

Les moyens de fixation de la grille 16 sur le boîtier 18 comportent des pattes élastiques 30 dont une extrémité est raccordée à un bras 32. L'autre extrémité des pattes 30 est adaptée coopérer avec la périphérie d'une platine supérieure 18A du boîtier de haut parleur. Les pattes 30 sont en saillie d'un côté interne des pattes 30, c'est-à-dire côté haut parleur, vers le haut.

A l'opposé des pattes 30, des moyens de fixation auxiliaires sont aménagés sur un côté externe de chaque bras 32. Les moyens de fixation auxiliaires comportent une aile horizontale 34 en saillie côté externe, en bas du bras. Des renforts inférieurs 36, situés sous l'aile, raccordent l'aile 34 et le bras 32.

En position normale d'utilisation quand les moyens de fixation du haut parleur coopèrent avec la paroi, les ailes 34 sont libres par rapport à la paroi 14 délimitant l'orifice 12. Les ailles sont positionnées en saillie externe par rapport à la tranche de la paroi 14 délimitant l'orifice 12.

En cas de choc, par exemple lors du déploiement des coussins gonflable de la planche de bord, l'orifice 12 peut se déformer. Les crochets 20 sont généralement suffisants pour assurer la tenue du tweeter et de la grille. Cependant, dans certains cas, les crochets 20 peuvent se décrocher de la paroi 14. Dans ce cas, la surface supérieure des ailes 34 est prévue pour entrer en contact avec la paroi 14, pour empêcher l'éjection de l'ensemble grille et tweeter dans l'habitacle.

En position de sécurité, quand les moyens de fixation 20 du haut parleur sont décrochés de la paroi 14, les ailes 34 sont adaptées à coopérer avec la paroi 14, sous cette dernière, pour former des moyens d'anti-éjection de la grille 18 et du haut parleur 10.

Les moyens de fixation par crochet 20 du haut parleur 10 sur la paroi sont décalés angulairement par rapport aux bras 32 portant les pattes élastiques 30 et les ailes 34. Le décalage angulaire est ici de 90 degrés. La fixation du haut parleur sur la paroi, la fixation de la grille sur le haut parleur et la fixation auxiliaire pour anti-éjection sont alors distinctes et indépendantes.

Pour le montage, le haut parleur est assemblé sur le dessous de la plaque supérieure de la grille, par engagement des pattes 30 sur la platine 18A, puis l'ensemble grille 18 et haut parleur 10 est assemblé sur la paroi, avec engagement par le dessus de cette dernière dans l'orifice 12. Lors de cette dernière phase d'assemblage, il y a d'abord déformation des bras 32 pour passage des ailes 34 dans l'orifice 12, puis engagement des crochets 20 dans les encoches 22 pour fixation principale.

Avantageusement, du fait des moyens de fixation auxiliaire ou anti-éjection, les moyens d'encliquetage de fixation principale et d'anti-éjection sont faciles à monter car leur raideur n'a pas besoin d'être trop importante. La grille ne nécessite pas l'emploi de crochets d'encliquetage difficile à mettre ne place car difficile à déformer en raison d'une raideur importante.

Dans une même gamme de véhicule, certains modèles comportent un tweeter et d'autres modèles ne comportent pas de tweeter. Ces derniers modèles comportent une grille pour obturer l'orifice qui reste présent sur tous les modèles. Dans ce cas, selon l'invention, le tweeter et son boîtier formant carcasse sont remplacés par un boîtier vide, appelé faux boîtier, ou par une pièce ayant la forme d'un boîtier en ce qui concerne les moyens de fixation. Le faux boîtier comporte le même contour qu'énoncé dans la description qui précède pour le tweeter, avec les moyens de fixation, mais il ne comporte pas d'élément électrique et acoustique de haut parleur tels que la membrane, l'électro-aimant et le connecteur.

## Revendications

1. Sous ensemble de véhicule pour fixation de grille d'habillage, le sous ensemble comportant une paroi (14) d'habillage d'habitacle du véhicule, un boîtier (18) de haut parleur monté dans un orifice (12) de la paroi et comportant des premiers moyens de fixation (20) sur la paroi délimitant l'orifice (12), et une grille (16) de recouvrement de haut parleur comportant des deuxièmes moyens de fixation (30) sur le boîtier, les premier et deuxième moyens de fixation étant distincts et indépendants, **caractérisé en ce que** le sous-ensemble comporte des troisièmes moyens de fixation auxiliaires (34), **en ce que** les troisièmes moyens de fixation auxiliaires (34) sont adaptés à être libres par rapport à la paroi (14) délimitant l'orifice (12) en position normale d'utilisation quand les premiers moyens de fixation (20) coopèrent avec la paroi (14) et **en ce que** les troisièmes moyens de fixation auxiliaires (34) sont des moyens anti-éjection adaptés à coopérer avec la paroi (14) quand les premiers moyens de fixation (20) sont décrochés de la paroi (14).

2. Sous ensemble selon la revendication précédente, **caractérisé en ce que** les troisièmes moyens de fixation auxiliaires (34) sont aménagés sur la grille (16).

3. Sous ensemble selon la revendication précédente, **caractérisé en ce que** les deuxièmes moyens de fixation (30) sont aménagés sur un côté interne d'un bras (32) de la grille et les troisièmes moyens de fixation auxiliaires (34) sont aménagés sur un côté externe du bras (32).

4. Sous ensemble selon l'une quelconque des revendications précédentes, **caractérisé en ce que** les moyens de fixation (20, 30, 34) sont des organes d'encliquetage.

5. Sous ensemble selon l'une quelconque des revendications précédentes, **caractérisé en ce que** les premier (20) et deuxième (30) moyens de fixation sont décalés angulairement sur le pourtour de l'orifice (12) par rapport au centre du boîtier (18).

6. Sous ensemble selon l'une quelconque des revendications précédentes, **caractérisé en ce que** le boîtier (18) est vide de tout élément électrique et acoustique de haut parleur.

7. Véhicule **caractérisé en ce qu'**il comporte un sous ensemble selon l'une quelconque des revendications précédentes, le sous ensemble étant un sous ensemble assurant la tenue de la grille (16) sur la paroi (14) même lors d'une déformation de cette dernière.

8. Véhicule automobile selon la revendication précédente, le véhicule comportant une planche de bord avec un coussin gonflable, **caractérisé en ce que** la paroi (14) est une portion de la planche de bord et le sous ensemble assure la tenue de la grille (16) sur la planche de bord du véhicule lors d'un choc avec déploiement du coussin gonflable.

9. Véhicule automobile selon l'une quelconque des revendications 7 à 8 combinée à la revendication 2, **caractérisé en ce que** les troisièmes moyens de fixation auxiliaires (34) sont des moyens anti-éjection qui coopèrent avec la paroi (14) après que les premiers moyens de fixation (20) se soient décrochés de la paroi (14).

## Claims

1. Vehicle subassembly for attaching an interior trim grille, the subassembly comprising a vehicle interior trim wall (14), a loudspeaker unit (18) mounted in a hole (12) in the wall and comprising first means (20) of attachment to the wall delimiting the hole (12), and a loudspeaker cover grille (16) comprising second means (30) of attachment to the unit, the first and second attachment means being separate and independent, **characterized in that** the subassembly comprises auxiliary third means (34) of attachment, **in that** the auxiliary third means (34) of attachment are designed to be free with respect to the wall (14) delimiting the hole (12) in the normal position of use when the first means (20) of attachment are collaborating with the wall (14), and **in that** the auxiliary third means (34) of attachment are ejection proofing means capable of collaborating with the wall (14) when the first means (20) of attachment are unfastened from the wall (14).

2. Subassembly according to the preceding claim, **characterized in that** the auxiliary third means (34) of attachment are formed on the grille (16).

3. Subassembly according to the preceding claim, **characterized in that** the second means (30) of attachment are formed on an internal side of an arm (32) of the grille and the auxiliary third means (34) of attachment are formed on an external side of the arm (32).

4. Subassembly according to any one of the preceding claims, **characterized in that** the means (20, 30, 34) of attachment are clip-fastening members.

5. Subassembly according to any one of the preceding claims, **characterized in that** the first (20) and second (30) means of attachment are angularly offset around the periphery of the hole (12) with respect to the middle of the unit (18).

6. Subassembly according to any one of the preceding claims, **characterized in that** the unit (18) is devoid of any loudspeaker acoustic or electrical element.

7. Vehicle **characterized in that** it comprises a subassembly according to any one of the preceding claims, the subassembly being a subassembly for holding the grille (16) on the wall (14) even if this wall deforms.

8. Motor vehicle according to the preceding claim, the vehicle comprising a dashboard with airbag, **characterized in that** the wall (14) is a portion of the dashboard and the subassembly holds the grille (16) on the dashboard of the vehicle in the event of an impact that involves deployment of the airbag.

9. Motor vehicle according to either one of Claims 7 and 8 combined with Claim 2, **characterized in that** the auxiliary third means (34) of attachment are ejection proofing means which collaborate with the wall (14) after the first means (20) of attachment have become unfastened from the wall (14).

## Patentansprüche

1. Fahrzeug-Baugruppe zur Befestigung eines Verkleidungsgitters, wobei die Baugruppe eine Verkleidungswand (14) des Fahrzeuginnenraums, ein Lautsprechergehäuse (18), das in eine Öffnung (12) der Wand montiert ist und erste Mittel (20) zur Befestigung an der die Öffnung (12) begrenzenden Wand aufweist, und ein Lautsprecher-Abdeckungsgitter (16) aufweist, das zweite Mittel (30) zur Befestigung am Gehäuse aufweist, wobei das erste und das zweite Befestigungsmittel getrennt und unabhängig sind, **dadurch gekennzeichnet, dass** die Baugruppe dritte Hilfsbefestigungsmittel (34) aufweist, dass die dritten Hilfsbefestigungsmittel (34) geeignet sind, bezüglich der Wand (14) frei zu sein, die die Öffnung (12) in der normalen Nutzungsstellung begrenzt, wenn die ersten Befestigungsmittel (20) mit der Wand (14) zusammenwirken, und dass die dritten Hilfsbefestigungsmittel (34) auswurfverhindernde Mittel sind, die geeignet sind, mit der Wand (14) zusammenzuwirken, wenn die ersten Befestigungsmittel (20) von der Wand (14) ausgehakt sind.

2. Baugruppe nach dem vorhergehenden Anspruch, **dadurch gekennzeichnet, dass** die dritten Hilfsbefestigungsmittel (34) auf dem Gitter (16) angeordnet sind.

3. Baugruppe nach dem vorhergehenden Anspruch, **dadurch gekennzeichnet, dass** die zweiten Befestigungsmittel (30) auf einer Innenseite eines Arms (32) des Gitters und die dritten Hilfsbefestigungsmittel (34) auf einer Außenseite des Arms (32) angeordnet sind.

4. Baugruppe nach einem der vorhergehenden Ansprüche, **dadurch gekennzeichnet, dass** die Befestigungsmittel (20, 30, 34) Einrastorgane sind.

5. Baugruppe nach einem der vorhergehenden Ansprüche, **dadurch gekennzeichnet, dass** die ersten (20) und zweiten (30) Befestigungsmittel auf dem Umriss der Öffnung (12) bezüglich der Mitte des Gehäuses (18) winkelmäßig versetzt sind.

6. Baugruppe nach einem der vorhergehenden Ansprüche, **dadurch gekennzeichnet, dass** das Gehäuse (18) kein elektrisches und akustisches Lautsprecherelement enthält.

7. Fahrzeug, **dadurch gekennzeichnet, dass** es eine Baugruppe nach einem der vorhergehenden Ansprüche aufweist, wobei die Baugruppe eine Baugruppe ist, die den Halt des Gitters (16) auf der Wand (14) selbst bei einer Verformung dieser Wand gewährleistet.

8. Kraftfahrzeug nach dem vorhergehenden Anspruch, wobei das Fahrzeug ein Armaturenbrett mit einem Airbag aufweist, **dadurch gekennzeichnet, dass** die Wand (14) ein Abschnitt des Armaturenbretts ist und die Baugruppe den Halt des Gitters (16) auf dem Armaturenbrett des Fahrzeugs bei einem Stoß mit Entfaltung des Airbags gewährleistet.

9. Kraftfahrzeug nach einem der Ansprüche 7 bis 8 kombiniert mit Anspruch 2, **dadurch gekennzeichnet, dass** die dritten Hilfsbefestigungsmittel (34) auswurfverhindernde Mittel sind, die mit der Wand (14) zusammenwirken, nachdem die ersten Befestigungsmittel (20) sich von der Wand (14) ausgehakt haben.
